# EUROPÄISCHE PATENTANMELDUNG

(11) **EP 1 190 824 A2**
(43) Veröffentlichungstag der Anmeldung: **27.03.2002**
(21) Anmeldenummer: 01112385.8
(22) Anmeldetag: 21.05.2001
(51) Int. Cl.: B27M 1/08

(54) **Verfahren und Vorrichtung zur Formatbearbeitung von fortlaufend bewegten Werkstücken**

(30) Priorität: 25.09.2000 DE 10047385; 09.02.2001 DE 10105960
(71) Anmelder: HOMAG MASCHINENBAU AG, D-72296 Schopfloch (DE)
(72) Erfinder: Peter Rathgeber, 72280 Dornstetten (DE); Karl Frey, 72296 Schopfloch (DE)
(74) Vertreter: HOFFMANN - EITLE

(57) **Zusammenfassung**

Es wird ein Verfahren und eine Vorrichtung zur Bearbeitung von fortlaufend bewegten Werkstücken (10) beschrieben, wobei die Werkstücke ausgerichtet und an einer im Wesentlichen parallel zur Bewegungsrichtung verlaufenden ersten Seite (11) im Durchlauf bearbeitet werden, und wobei die Werkstücke (10) an einer der ersten Seite (11) im Wesentlichen gegenüberliegenden und zu dieser parallelen zweiten Seite (12) im Format bearbeitet werden. Die Vorrichtung weist eine Transporteinrichtung (51, 52) zum Transport der Werkstücke (10) entlang einer Bearbeitungseinrichtung (70) zur Bearbeitung der ersten, im Wesentlichen parallel zur Bewegungsrichtung verlaufenden Seite (11) der Werkstücke (10) auf, wobei eine Formatbearbeitungseinrichtung (110) zur Formatbearbeitung einer der ersten Seite (11) der gegenüberliegenden zweiten, ebenfalls im Wesentlichen parallel zur Bewegungsrichtung verlaufenden Seite (12) der Werkstücke (10) vorgesehen ist.

## Beschreibung

### Technisches Gebiet

Die Erfindung betrifft ein Verfahren sowie eine Vorrichtung zur Bearbeitung von fortlaufend bewegten Werkstücken, welche vorzugsweise plattenförmig, streifenförmig oder leistenförmig ausgebildet sind, insbesondere zur Bearbeitung von Werkstücken unterschiedlicher Größe aus Holz, aus holzähnlichen Werkstoffen oder Kunststoffen.

Derartige Verfahrensweisen und Vorrichtungen werden insbesondere zur flexiblen Formatbearbeitung von Möbelteilen bzw. Holzplatten mit unterschiedlicher Größe eingesetzt, die jeweils an den Längs- und/oder Querkanten zu bearbeiten sind. Eine derartige Bearbeitung kann beispielsweise eine Längen-und Querbearbeitung durch Fräsen, Auf- bzw. Umleimen von Kanten sowie eine daran anschließende Nachbearbeitung der Kante sein, um fertige Möbelteile, wie beispielsweise ein Front- oder Türenelement im Durchlauf herzustellen.

### Stand der Technik

Es sind bereits Verfahren und Vorrichtungen zur Bearbeitung von fortlaufend bewegten Werkstücken bekannt, bei denen die Werkstücke von Hand vom Bedienpersonal ausgerichtet und in die Vorrichtungen eingeführt werden. Im weiteren Verlauf werden sie dann automatisch an einer Seite im Durchlauf bearbeitet. Nach der Bearbeitung der ersten Seite werden die Werkstücke per Hand vom Bedienpersonal oder automatisch von einer Rückführeinrichtung entnommen, zum Einlauf der Vorrichtung zurücktransportiert, gedreht und in einem zweiten Durchlauf an einer zweiten Seite bearbeitet. Eine derartige Bearbeitung der Werkstücke ist zeit- und personalaufwendig und folglich kostenintensiv.

Ferner sind Verfahren und Vorrichtungen zur Bearbeitung von fortlaufend bewegten Werkstücken bekannt, bei denen jeweils zwei gegenüberliegende Seiten gleichzeitig in einem Durchlauf bearbeitet werden. Die Bearbeitungseinrichtungen für die einander gegenüberliegenden, d.h. meist rechte und linke Seite der Werkstücke müssen dabei zur Anpassung an die Maße bzw. Größe der Werkstücke abstandsveränderbar miteinander gekoppelt sein, so dass derartige doppelseitig arbeitende Vorrichtungen komplex und technisch aufwendig aufgebaut sind. Im Falle einer Umstellung auf andere Werkstückmaße müssen die Vorrichtungen komplett leergefahren werden, was zu hohen Umrüstzeiten und Stillstandszeiten führt. Es werden daher mit bekannten Verfahrensweisen dieser Art üblicherweise nur mittlere und große Losgrößen gefahren.

Darüber hinaus wird in den zum Anmeldezeitpunkt dieser Anmeldung noch unveröffentlichten Prioritätsanmeldungen DE 100 47 385.7 und DE 101 05 960.4 der Anmelderin ein Verfahren sowie eine Vorrichtung zur Bearbeitung von fortlaufend bewegten Werkstücken beschrieben, auf die hiermit im vollen Umfang Bezug genommen wird. Gemäß der DE 100 47 385.7 wird ein Verfahren und eine Vorrichtung beschrieben, wobei die Werkstücke ausgerichtet und an einer im Wesentlichen parallel zur Bewegungsrichtung verlaufenden ersten Seite im Durchlauf bearbeitet werden und danach im Durchlauf quer zur Bewegungsrichtung verschoben, ausgerichtet sowie an der gegenüberliegenden, im Wesentlichen ebenfalls parallel zur Bewegungsrichtung verlaufenden zweiten Seite im Durchlauf bearbeitet werden. Jedoch kann es sich bei dem Verfahren bzw. der Vorrichtung gemäß der Anmeldung DE 100 47 385.7 ergeben, dass die Ausrichtung der zweiten Seite der Werkstücke nach dem Verschieben von der ersten Anschlaglage in die zweite Anschlaglage nicht maß- und winkelgerecht zur ersten Seite ist, d.h., dass die bereits bearbeitete erste Seite bezüglich der Bewegungsrichtung der Werkstücke 10 unterschiedlich ausgerichtet ist als die noch nicht bearbeitete zweite Seite. Als Folge davon erhält man nach der Bearbeitung ein Werkstück, welches eine bearbeitete erste Seite und eine bearbeitete zweite Seite aufweist, die im Winkel und somit auch ein Maß nicht zueinander ausgerichtet sind.

### Darstellung der Erfindung

Der Erfindung liegt das technische Problem zugrunde, ein Verfahren und eine Vorrichtung mit minimalen Umrüstzeiten zu schaffen, wobei die bearbeitete erste Seite und die bearbeitete zweite Seite von unterschiedlichen Werkstücken maß- und winkelgerecht ausgerichtet sind.

Dieses technische Problem wird durch ein Verfahren mit den Merkmalen des Anspruchs 1 und eine Vorrichtung mit den Merkmalen des Anspruchs 14 gelöst.

Der Erfindung liegt der Gedanke zugrunde, eine Durchlaufbearbeitung von Werkstücken in der Weise zu gestalten, dass die eine Seite der Werkstücke im Durchlauf bearbeitet sowie parallel dazu die andere, gegenüberliegende Seite der Werkstücke in dieser Einspannung im Durchlauf formatbearbeitet werden, so dass die Werkstücke im Durchlauf auf Maß und winkelgerecht zueinander an parallelen Seiten bearbeitet werden. Somit können die Werkstücke längs oder quer bearbeitet werden, wobei die erste Seite beispielsweise gefräst und mit einem Umleimer versehen werden kann und parallel dazu die zweite Seite im Format bearbeitet wird, so dass in einer Einspannung des Werkstücks eine kostengünstige maß- und winkelgerechte Fertigung ermöglicht wird.

Damit ist es möglich, nicht nur kleine Losgrößen, sondern sogar in ihrem Maßen völlig unterschiedliche Einzelstücke hintereinander im Durchlauf ohne aufwendige Umstellarbeiten und ohne zusätzliche Umrüstzeiten zu bearbeiten, wobei die erste Seite und die zweite Seite der Werkstücke maß- und winkelgerecht durch eine entsprechende Formatbearbeitungseinrichtung und die Bearbeitungseinrichtung bearbeitet sind. Ferner können durch dieses erfindungsgemäße Bearbeitungsverfahren Werkstücke unterschiedliche Größe in beliebiger Reihenfolge sowohl einer Längsbearbeitung als auch einer Querbearbeitung unterzogen werden.

Die erfindungsgemäße Vorrichtung weist eine Transporteinrichtung zum Transport der Werkstücke entlang einer Bearbeitungseinrichtung und entlang einer Formatbearbeitungseinrichtung auf, so dass die Werkstücke an der ersten und zweiten Seiten parallel auf Maß bearbeitet werden. Somit kann die erste Seite bearbeitet und beispielsweise mit einem Umleimer versehen werden und die zweite Seite kann gleichzeitig auf das entsprechende Maß durch die Formatbearbeitung bearbeitet werden. Als Folge davon erhält man ein Werkstück dass an den parallelen Seiten winkel- und maßgerecht bearbeitet ist, wobei die einstellbare Formatbearbeitungseinrichtung in entsprechender Art und Weise auf das jeweilige gewünschte Format der Werkstücke eingestellt wird.

Die erfindungsgemäße Vorrichtung ist insbesondere für die Bearbeitung von im Wesentlichen sich gegenüberliegenden Kanten bzw. Seiten plattenförmiger Werkstücke aus Holz zweckmäßig, wobei ein Umrüsten der Vorrichtung auf Werkstücke unterschiedlicher Größe durch die Anpassung der Formatbearbeitungseinrichtung an das gewünschte Format erfolgt. Somit kommt es auch bei Werkstücken mit kleinen Losgrößen oder Einzelstücken zu keinen Stillstandszeiten und nur geringen Umrüstzeiten der Vorrichtung, da die Formatbearbeitung bei Bearbeitung der ersten Seite des Werkstücks bereits abgeschlossen ist und daraufhin das Werkstück in einer weiteren Vorrichtung oder wieder in der selben Vorrichtung weiter bearbeitet werden kann.

Weitere vorteilhaft Ausgestaltungen ergeben sich aus den Unteransprüchen. So ist es vorteilhaft, dass die Formatbearbeitung der zweiten Seite vor oder während der Bearbeitung der ersten Seite erfolgt, so dass die Formatbearbeitung des Werkstücks zu diesem Zeitpunkt abgeschlossen ist, um die Durchlaufzeiten und somit den Durchsatz zu erhöhen.

Ferner ist es vorteilhaft, wenn die formatbearbeitete zweite Seite in mindestens einem weiteren Durchlauf fertig bearbeitet wird, so dass das Werkstück in einem weiteren Durchlauf in gewünschter Weise ohne Zeit- bzw. Taktverlust bearbeitet werden kann.

Wenn die Bearbeitung der Werkstücke im ersten und in den weiteren Durchläufen in ein und derselben Maschine erfolgt, sind keine weiteren Vorrichtungen zur Fertigstellung der Werkstücke erforderlich.

Wenn die Werkstücke an allen vier Seiten in ein und derselben Maschine gemäß der Erfindung bearbeitet werden, kann sowohl die Längs- als auch die Querverarbeitung der Werkstücke in dieser Maschine durchgeführt werden, um ein an allen vier Seiten fertig bearbeitetes Werkstück zu erhalten. Dabei kann ein bereits an der zweiten Seite bearbeitetes Werkstück von der Formatbearbeitungseinrichtung auch nicht weiter im Format bearbeitet werden, falls dies gewünscht ist.

Vorteilhafterweise wird die erste Seite der Werkstücke von einer Bearbeitungseinrichtung und die zweite Seite der Werkstücke von einer Formatbearbeitungseinrichtung parallel zur ersten Seite bearbeitet.

Ferner ist es vorteilhaft, wenn die Formatbearbeitungseinrichtung zur Anpassung an die jeweiligen Werkstückabmessungen im Wesentlichen quer zur Bewegungsrichtung der Werkstücke bewegt wird, so dass eine schnelle Anpassung an das gewünschte Format erfolgt.

Darüber hinaus ist es vorteilhaft, wenn die Formatbearbeitungseinrichtung an einem quer zur Bewegungsrichtung der Werkstücke verlaufenden Ausleger stufenlos verfahrbar bewegt wird, welche insbesondere portalförmig oberhalb der Transporteinrichtung ausgebildet ist, so dass die Formatbearbeitungseinrichtung auf unterschiedliche große Werkstücke exakt einstellbar ist.

Wenn an dem Ausleger der Formatbearbeitungseinrichtung ein erstes Bearbeitungsaggregat an der ersten Längsseite des Auslegers und ein zweites Bearbeitungsaggregat der ersten Längsseite gegenüberliegenden zweiten Längsseite des Auslegers jeweils zur Bearbeitung einer zweiten Seite eines Werkstücks bewegt wird, kann die Umrüstzeit auf Werkstücke unterschiedlicher Größe minimiert werden. Dies wird insbesondere dadurch bewerkstelligt, dass die zweite Seite eines ersten Werkstücks von dem ersten Bearbeitungsaggregat bearbeitet wird, und wobei die zweite Seite eines weiteren Werkstücks von dem zweiten Bearbeitungsaggregat bearbeitet wird. Vorteilhafterweise wird während der Bearbeitung der zweiten Seite des ersten Werkstücks durch das erste Bearbeitungsaggregat das zweite Bearbeitungsaggregat in die Position zur Bearbeitung der zweiten Seite des weiteren Werkstücks bewegt. Die Bearbeitungsaggregate können natürlich auch entsprechend umgekehrt verfahren werden.

Wenn die Werkstücke während der Bearbeitung durch eine Transporteinrichtung in Bewegungsrichtung transportiert werden und von einem über der Transporteinrichtung angeordneten Überdrucksystem zur Werkstückeinspannung auf der Transporteinrichtung fixiert werden, kann die erfindungsgemäße Bearbeitung während dieser geeigneten Einspannung an beiden gegenüberliegenden Seiten erfolgen, wobei der Transport und die Fixierung durch die Transporteinrichtung und das Überdrucksystem erfolgt.

Darüber hinaus ist es vorteilhaft, wenn im Wesentlichen quer zur Bewegungsrichtung verlaufende, mitlaufende Anschlaganordnung zur winkelgerechten Ausrichtung der Werkstücke an der Transporteinrichtung angebracht sind, um das Ausrichten der Werkstücke zu erleichtern.

Vorteilhafterweise sind die Anschlaganordnungen aus jeweils einer über die gesamte Breite der Transporteinrichtung verlaufenden Mitnahmeschiene oder aus jeweils zwei oder mehreren Anschlagzapfen oder Anschlagstiften gebildet.

Der Transport der Werkstücke wird in geeigneter Weise durch die Transporteinrichtung mit zwei durchgehend nebeneinander angeordneten Transportketten gewährleistet.

Gemäß einer vorteilhaften Ausführungsform sind im Wesentlichen parallel zur Bewegungsrichtung verlaufende Queranschläge zur Ausrichtung der Werkstücke vorgesehen, so dass für ein winkel- und maßgenaues Ausrichten der Werkstücke zur Bearbeitung gesorgt wird. Dies wird insbesondere dadurch gewährleistet, dass die Queranschläge aus jeweils einer oder mehreren Leisten gebildet sind. Vorteilhafterweise ist eine Vielzahl von Einzugsrollen in Zusammenarbeit mit den Queranschlägen für die Ausrichtung der Werkstücke vorgesehen. Dabei werden die Werkstücke durch die schräg zu den Queranschlägen angeordneten Einzugsrollen mit diesen in Anlage gebracht. Dadurch werden die Werkstücke mit der Einzugsrollen insbesondere bis zur Anlage an ein Einlauflineal automatisch mit dem Durchlauf gebracht, wobei der Schlupf zwischen den Einzugsrollen und den Werkstücken derart bemessen ist, dass die Einzugsrollen über die Werkstücke gleiten, nachdem diese an den Queranschlägen anliegen.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigen:
- Fig. 1: eine schematische Gesamtansicht der erfindungsgemäßen Vorrichtung;
- Fig. 2: eine teilweise in Querschnitt dargestellte Ansicht der Werkstückeinspannung der erfindungsgemäßen Vorrichtung; und
- Fig. 3: eine schematische Draufsicht der erfindungsgemäßen Vorrichtung mit Einlauflineal.

### Beschreibung einer bevorzugten Ausführungsform der Erfindung

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist. Darüber hinaus verweisen wir bezüglich der identischen Vorrichtungskomponenten auf die Beschreibung der Anmeldungen DE 100 47 385.7 und DE 101 05 960.4, auf deren Offenbarungsgehalt hier nochmals ausdrücklich Bezug genommen wird.

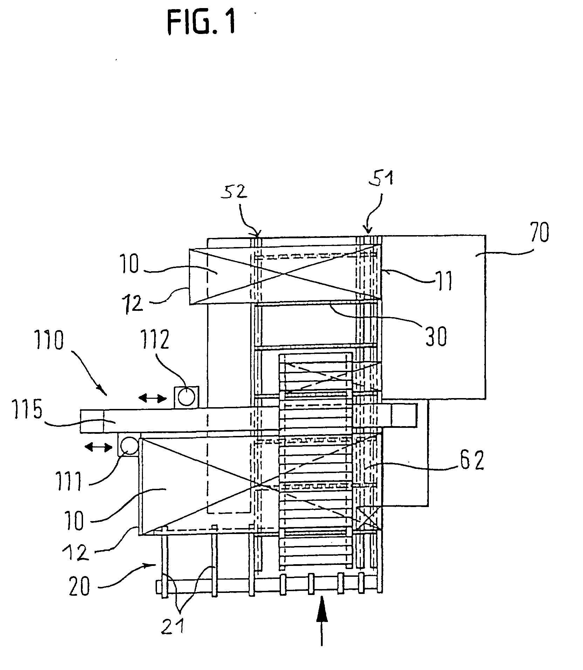

In Fig. 1 ist ein Beispiel einer erfindungsgemäßen Vorrichtung zur Bearbeitung von fortlaufend bewegten Werkstücken 10 dargestellt, welche vorzugsweise plattenförmig ausgebildet sind und aus Holz bestehen. Die Bewegungsrichtung der Werkstücke ist durch den Pfeil am Einlauf 20 dargestellt. Der Einlauf ist aus einer Rollenbahn 21 gebildet. Die Werkstücke 10 werden an quer zur Bewegungsrichtung verlaufenden, mitlaufenden Anschlaganordnung 30 und quer zur Bewegungsrichtung im Winkel in eine Anschlaglage ausgerichtet. Daraufhin werden die Werkstücke 10 im Bereich der ersten Seite 11 mittels einer Bearbeitungseinrichtung 70 beispielsweise durch Fräsen, Sägen oder ähnlichem fortlaufend bearbeitet und vorzugsweise wird die Kante daraufhin im Durchlauf mit einem Kantenumleimer versehen. Ebenso wird in der Anschlaglage die zweite Seite 12 mittels einer Format bear beitung seinrichtung 110 im Durchlauf im Winkel und auf Maß bearbeitet.

Die Formatbearbeitungseinrichtung 110 weist einen quer zur Bewegungsrichtung der Werkstücke 10 verlaufenden Ausleger 115 auf, an dem ein erstes und zweiten Formatbearbeitungsaggregat 111, 112 stufenlos verfahrbar angeordnet ist. Das erste Formatbearbeitungsaggregat 111 ist an der ersten Seite des Auslegers 115 und ein zweites Formatbearbeitungsaggregat 112 ist an der der ersten Längsseite gegenüberliegenden zweiten Längsachse des Auslegers 115 derart angeordnet, dass das erste Formatbearbeitungsaggregat 111 unabhängig von dem zweiten Formatbearbeitungsaggregat 112 stufenlos verfahren werden kann.

Die Werkstücke 10 werden dabei gemäß der Pfeilrichtung von einer Transporteinrichtung 51, 52 von dem Einlauf 20 zu einem nicht dargestellten Auslauf transportiert. Die Transporteinrichtung 51, 52 ist aus einer ersten Transporteinheit 51 und einer zweiten Transporteinheit 52 aufgebaut, wobei die erste Transporteinheit 51 zur Einspannung und zum Transport der Werkstücke 10 während der Bearbeitung vorgesehen ist. Die Bearbeitungseinrichtung 70 kann aus einer Reihe von in Durchlaufrichtung hintereinander angeordneten Bearbeitungsvorrichtungen gebildet sein, wie beispielsweise einer Fräsvorrichtung und eine in Bewegungsrichtung bzw. Durchlaufrichtung dahinter angeordnete Kantenumleimeinrichtung mit einer entsprechenden Nachbearbeitung.

Die zweite Transporteinheit 52 kann bei besonders langen bzw. breiten Werkstücken 10 ebenso zur Auflage und zum Transport der Werkstücke 10 während der Bearbeitung vorgesehen sein. Die Einspannung der Werkstücke 10 während der Bearbeitung erfolgt über ein Oberdrucksystem 62, wobei das Oberdrucksystem 62 das Werkstück 10 zur Einspannung auf die erste Transporteinheit 51 nach unten drückt. Die Transporteinheiten 51, 52 sind jeweils aus durchgehenden Transportketten 53, 54 in Form einer Kettenbahn gebildet, die wiederum aus einzelnen Kettenplatten bestehen.

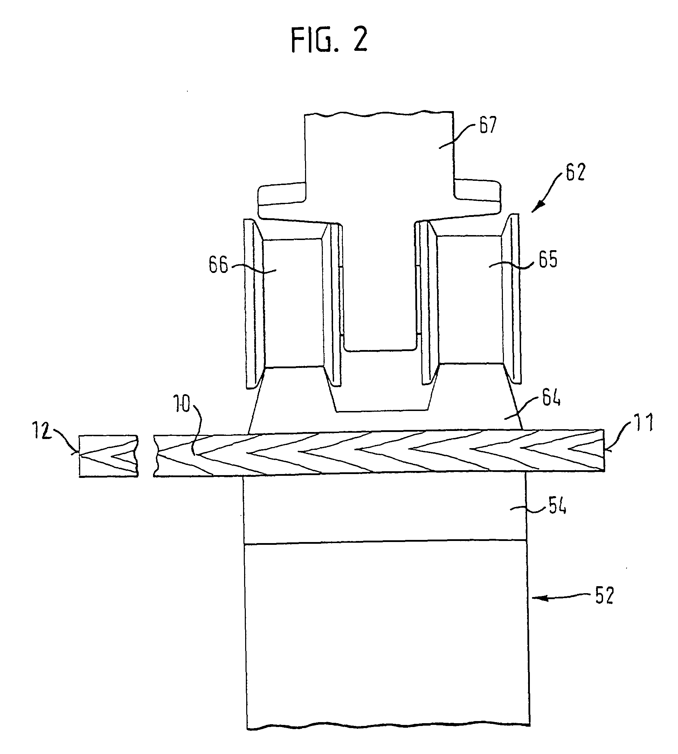

In Fig. 2 wird nun die Einspannung der Werkstücke 10 näher ersichtlich. Das Werkstück 10 ist zwischen dem Oberdrucksystem 62 und der Transporteinrichtung 51, 52 eingespannt, wobei zur Bearbeitung der ersten Seite 11 des Werkstücks 10 dieses in geeigneter Weise über den Bereich der Einspannung des Werkstücks 10 hinausragt.

An der der zweiten Seite 12 gegenüberliegenden ersten Seite 11 ragt das Werkstück 10 über den Bereich der Einspannung je nach unterschiedlicher Größe bzw. Länge des Werkstücks 10 quer zur Bewegungsrichtung hinaus, welche in Fig. 2 in Blickrichtung verläuft. Die Einspannung der Werkstücke 10 erfolgt von unten durch eine die zweite Transporteinheit 52 bildende Transportkette 54. Von oben wird das Werkstück 10 durch die Oberdruckeinheit 62 derart auf die Transportkette 54 gedrückt, dass das Werkstück 10 von den Bearbeitungseinrichtungen 70 und der Formatbearbeitungseinrichtung 110 mit ausreichender Präzision bearbeitet werden kann. Dabei wird das Werkstück 10 von einem Obergurt 64, der insbesondere aus einem elastischen Material hergestellt ist, über zwei mit dem Profil des Obergurts 64 zusammenwirkenden Rollen 65, 66 gehalten. Zum Einspannen der Werkstücke 10 sind eine Vielzahl von derartigen Rollen 65, 66 in Bewegungsrichtung über entsprechende Rollenhalterungen 67 derart gelagert, dass der Obergurt 64 nach unten auf das Werkstück 10 gedrückt wird. Dadurch wird eine Relativbewegung des Werkstücks 10 sowohl zwischen dem Obergurt 64 als auch zwischen der Transportkette 54 vermieden.

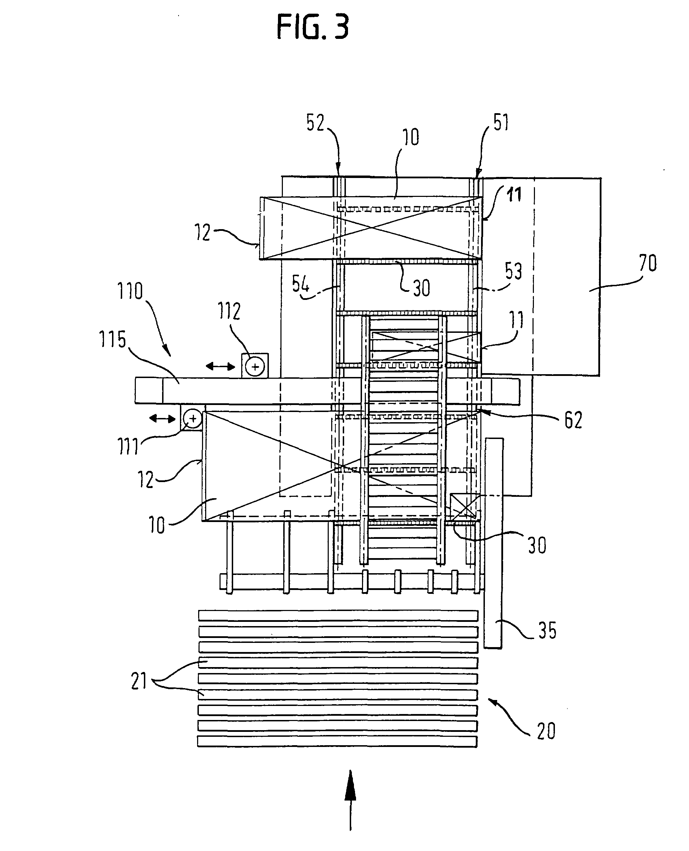

Fig. 3 stellt die erfindungsgemäßen Vorrichtung dar, wobei die Werkstücke über den Einlauf 20 der erfindungsgemäßen Vorrichtung zugeführt werden und anschließend daran an der zweiten Seite 12 und der ersten Seite 11 bearbeitet werden.

Wie aus Fig. 3 ersichtlich, werden die Werkstücke 10 über den aus einzelnen Rollen 21 bestehenden Einlauf 20 der erfindungsgemäßen Vorrichtung zur Längsbearbeitung zugeführt. Dabei werden die Werkstücke 10 entlang einem einen Queranschlag 35 bildenden Einlauflineal 35 ausgerichtet und gleichzeitig oder darauf folgend an einer Mitnahmeschiene 30 bzw. Anschlaganordnung 30 ausgerichtet. Die Anschlaganordnung 30 ist insbesondere in einer über die gesamte Breite der Transporteinrichtung 51, 52 verlaufenden Mitnahmeschiene 30 ausgebildet, wobei eine Vielzahl von Mitnahmeschienen 30 entlang der Transporteinrichtung 51, 52 angeordnet sind. Insbesondere tragen die beiden Transportketten 53, 54 in einem Abstand von 500 mm über der gesamten Länge jeweils Mitnahmeschienen, die parallel zueinander verlaufen. Da die Anschlaganordnungen 30 an der Transporteinrichtung 51, 52 versenkbar angeordnet sind, können Werkstücke 10 unterschiedlicher Größe hintereinander transportiert werden, so dass die Anschlaganordnungen 30 je nach Bedarf oberhalb der Transportketten 53, 54 herausragen. Genauer gesagt können die Mitnahmeschienen 30 eingefahren oder ausgefahren sein, so dass es möglich ist, dass die Werkstücke an einer Mitnahmeschiene ausgerichtet werden können oder andererseits sich über eine eingefahrene Mitnahmeschiene erstrecken, wenn sich das Werkstück aufgrund seiner Größe derart erstreckt, dass es oberhalb einer darauf folgenden Mitnahmeschiene angeordnet ist. Die Mitnahmeschienen können je nach Bedarf bzw. je nach Größe der Werkstücke 10 derart gesteuert werden, dass sie in vertikaler Richtung über die Transporteinrichtung 51, 52 herausragen oder unterhalb der Transporteinrichtung 51, 52 versenkt sind. Die Mitnahmeschienen sind insbesondere in die Transportketten 53, 54 versenkbar und hoch steuerbar.

Zur Einspannung der Werkstücke 10 werden diese wie bereits vorstehend beschrieben durch ein Oberdrucksystem 62 auf die Transporteinrichtung 51, 52 gedrückt. Nach dem Einspannen der Werkstücke 10 wird die zweite Seite 12 von der Formatbearbeitungseinrichtung 110 bearbeitet. Die Formatbearbeitungseinrichtung 110 kann eine Frässeinrichtung oder ähnliches aufweisen. Ebenso wird daran anschließend in der Anschlaglage die erste Seite 11 mittels der Bearbeitungseinrichtung 70 im Durchlauf bearbeitet.

Die Funktionsweise der Formatbearbeitungseinrichtung 110 mit nur einem Fräser 111 wird im Folgendes beschrieben. Der Fräser wird quer zur Bewegungsrichtung der Werkstücke 10 an dem Ausleger 115 derart verschoben, dass der Fräser 111 in die entsprechende Position gebracht wird, um das gewünschte Format durch Abfräsen der zweiten Seite 12 der Werkstücke 10 zu erlangen.

Wie insbesondere in Fig. 1 und 3 dargestellt, kann die Format bear beitung seinrichtung 110 zwei Fräser 111, 112 jeweils an einer Längsseite des Auslegers 115 aufweisen. Somit ist es möglich, dass der erste Fräser 111 die zweite Kante 12 eines ersten Werkstücks fertigt und der zweite Fräser 112 die zweite Kante 212 eines weiteren Werkstücks fertigt. Dabei ist es insbesondere vorteilhaft, dass der zweite Fräser 112 dann in die geeignete Position zur Bearbeitung der zweiten Kante 12 des weiteren Werkstücks an dem Ausleger verfahren wird, wenn der erste Fräser 111 mit dem ersten Werkstück im Eingriff ist. Somit entstehen bei unterschiedlichen Werkstückformaten keine Umrüstzeiten, da sich der zweite Fräser 112 bereits in der geeigneten Position an dem Ausleger 115 befindet, um die zweite Kante 12 des darauf folgenden Werkstücks zu fertigen.

Somit können durch die erfindungsgemäße Vorrichtung Werkstücke 10 mit unterschiedlicher Länge bzw. Größe ohne Taktverlust in beliebiger Reihenfolge auf Maß und Winkel bearbeitet werden. Dies ist aufgrund der parallel arbeitenden Formatbearbeitungseinrichtung 110 und der Bearbeitungseinrichtung 70 möglich, so dass wie in den Figuren dargestellt einzelne Werkstücke mit unterschiedlicher Größe im Durchlauf ohne Taktverlust mit Stückzahl 1 bearbeitet werden können. Darüber hinaus ist es möglich, dass die Werkstücke in beliebiger Reiheinfolge sowohl längs als auch quer bearbeitet werden können, da insbesondere je nach Bedarf die Mitnahmeschienen 30 hoch steuerbar bzw. versenkbar sind. Zusammenfassend ist zu erwähnen, dass durch die erfindungsgemäße Vorrichtung insbesondere plattenförmige Werkstücke 10 durch einen zweimaligen Durchlauf durch die erfindungsgemäßen Vorrichtung winkel- und maßgerecht an den Kanten beispielsweise zu einem fertigen Türenelement mit umgeleimten Kanten bearbeitet werden können.

Gemäß einer nicht dargestellten Ausführungsform kann die Transporteinrichtung quer zur Bewegungsrichtung sowie über die gesamte Breite der Transporteinrichtung verlaufende Längselemente zur Auflage für die Werkstücke 10 aufweisen, wobei sich die Längselemente derart über die gesamte Breite der Transporteinrichtung erstrecken, dass sie zum einen auf der Transportkette 53 als auch auf der Transportkette 54 gelagert sind. Aufgrund der breiten Ausgestaltung der durch die Längselemente gebildete Transporteinrichtung können die Werkstücke 10 sowohl während der Bearbeitung der ersten Seite 11 als auch während der Bearbeitung der zweiten Seite 12 auf den Längselementen angeordnet sein. Diese Längselemente können wiederum angehoben werden, so dass sich dadurch die mitlaufenden Anschlaganordnungen 30 ergeben, die bezüglich der jeweiligen Werkstückgröße gesteuert werden können.

## Patentansprüche

1. Verfahren zur Bearbeitung von fortlaufend bewegten Werkstücken (10), wobei die Werkstücke (10) ausgerichtet und an einer im Wesentlichen parallel zur Bewegungsrichtung verlaufenden ersten Seite (11) im Durchlauf bearbeitet werden,
**dadurch gekennzeichnet, dass**
die Werkstücke (10) an einer der ersten Seite im Wesentlichen gegenüberliegenden und zu dieser parallelen zweiten Seite im Format bearbeitet werden.

2. Verfahren nach Anspruch 1, **dadurch gekennzeichnet, dass** die Formatbearbeitung der zweiten Seite (12) vor oder während der Bearbeitung der ersten Seite (11) erfolgt.

3. Verfahren nach Anspruch 1 oder 2, **dadurch gekennzeichnet, dass** die formatbearbeitete zweite Seite (12) in mindestens einem weiteren Durchlauf fertig bearbeitet wird.

4. Verfahren nach Anspruch 3, **dadurch gekennzeichnet, dass** die Bearbeitung im ersten und in den weiteren Durchläufen in ein und derselben Maschine erfolgt.

5. Verfahren zur Bearbeitung von an vier Seiten zu bearbeitenden Werkstücken gemäß zumindest einem der Ansprüche 1 bis 4, **dadurch gekennzeichnet, dass** die Werkstücke (10) an allen vier Seiten in ein und derselben Maschine bearbeitet werden.

6. Verfahren nach einem der Ansprüche 1 bis 5, **dadurch gekennzeichnet, dass** die erste Seite (11) der Werkstücke (10) von einer Bearbeitungseinrichtung (70) und die zweite Seite (12) der Werkstücke (10) von einer Formatbearbeitungseinrichtung (110) parallel zur ersten Seite (11) bearbeitet wird.

7. Verfahren nach Anspruch 6, **dadurch gekennzeichnet, dass** die Formatbearbeitungseinrichtung (110) zur Anpassung an die jeweiligen Werkstückabmessungen im Wesentlichen quer zur Bewegungsrichtung der Werkstücke (10) bewegt wird.

8. Verfahren nach Anspruch 7, **dadurch gekennzeichnet, dass** die Formatbearbeitungseinrichtung (110) an einem quer zur Bewegungsrichtung der Werkstücke (10) verlaufenden Ausleger (115) stufenlos verfahrbar bewegt wird.

9. Verfahren nach Anspruch 8, **dadurch gekennzeichnet, dass** an dem Ausleger (115) der Formatbearbeitungseinrichtung (110) ein erstes Bearbeitungsaggregat (111) an der ersten Längsseite des Auslegers (115) und ein zweites Bearbeitungsaggregat (112) an der der ersten Längsseite gegenüberliegenden zweiten Längsseite des Auslegers (115) jeweils zur Bearbeitung einer zweiten Seite (12) eines Werkstücks (10) bewegt wird.

10. Verfahren nach einem der Ansprüche 1 bis 9, **dadurch gekennzeichnet, dass** die zweite Seite (12) eines ersten Werkstücks (10) von dem ersten Bearbeitungsaggregat (111) bearbeitet wird, und wobei die zweite Seite (12) eines weiteren Werkstückes (10) von dem zweiten Bearbeitungsaggregat (112) bearbeitet wird.

11. Verfahren nach Anspruch 10, **dadurch gekennzeichnet, dass** während der Bearbeitung der zweiten Seite (12) des ersten Werkstücks (10) durch das erste Bearbeitungsaggregat (111) das zweite Bearbeitungsaggregat (112) in die Position zur Bearbeitung der zweiten Seite (12) des weiteren Werkstückes (10) bewegt wird.

12. Verfahren nach Anspruch 10, **dadurch gekennzeichnet, dass** während der Bearbeitung der zweiten Seite (12) des ersten Werkstücks (10) durch das zweite Bearbeitungsaggregat (112) das erste Bearbeitungsaggregat (111) in die Position zur Bearbeitung der zweiten Seite (12) des weiteren Werkstücks (10) bewegt wird.

13. Verfahren nach einem der Ansprüche 1 bis 12, **dadurch gekennzeichnet, dass** die Werkstücke (10) während der Bearbeitung durch eine Transporteinrichtung (51, 52) in Bewegungsrichtung transportiert werden und von einem über der Transporteinrichtung (51, 52) angeordneten Oberdrucksystem (62) zur Werkstückeinspannung auf der Transporteinrichtung (51, 52) fixiert werden.

14. Vorrichtung zur Bearbeitung von fortlaufend bewegten Werkstücken (10) mit einer Transporteinrichtung (51, 52) zum Transport der Werkstücke (10) entlang einer Bearbeitungseinrichtung (70) zur Bearbeitung einer ersten, im Wesentlichen parallel zur Bewegungsrichtung verlaufenden Seite (11) der Werkstücke (10),
wobei eine Formatbearbeitungseinrichtung (110) zur Formatbearbeitung einer der ersten Seite (11) gegenüberliegenden zweiten, ebenfalls im Wesentlichen parallel zur Bewegungsrichtung verlaufenden Seite (12) der Werkstücke (10) vorgesehen ist.

15. Vorrichtung nach Anspruch 14, **dadurch gekennzeichnet, dass** die Formatbearbeitungseinrichtung (110) einen quer zur Bewegungsrichtung der Werkstücke (10) verlaufenden Ausleger (115) aufweist, auf dem zumindest ein Formatbearbeitungsaggregat (111, 112) stufenlos verfahrbar angeordnet ist.

16. Vorrichtung nach Anspruch 15, **dadurch gekennzeichnet, dass** an dem Ausleger (115) der Formatbearbeitungseinrichtung (110) ein erstes Formatbearbeitungsaggregat (111) an der ersten Längsseite des Auslegers (115) und ein zweites Formatbearbeitungsaggregat (112) an der der ersten Längsseite gegenüberliegenden zweiten Längsseite des Auslegers (115) stufenlos verfahrbar angeordnet ist.

17. Vorrichtung nach einem oder mehreren der Ansprüche 14 bis 16, **dadurch gekennzeichnet, dass** im Wesentlichen quer zur Bewegungsrichtung verlaufende, mitlaufende Anschlaganordnungen (30) zur winkelgerechten Ausrichtung der Werkstücke (10) an der Transporteinrichtung (51, 52) angebracht sind.

18. Vorrichtung nach Anspruch 17, **dadurch gekennzeichnet, dass** die Anschlaganordnungen (30) aus jeweils einer über die gesamte Breite der Transporteinrichtung (51, 52) verlaufenden Mitnahmeschiene (30) gebildet sind.

19. Vorrichtung nach Anspruch 17 oder 18, **dadurch gekennzeichnet, dass** die Anschlaganordnungen (30) aus jeweils zwei oder mehreren Anschlagzapfen oder Anschlagstiften gebildet sind.

20. Vorrichtung nach einem der Ansprüche 14 bis 19, **dadurch gekennzeichnet, dass** die Transporteinrichtung (51, 52) zwei durchgehende, nebeneinander angeordnete Transportketten (53, 54) aufweist.

21. Vorrichtung nach einem der Ansprüche 14 bis 20, **dadurch gekennzeichnet, dass** im Wesentlichen parallel zur Bewegungsrichtung verlaufende Queranschläge (35) zur Ausrichtung der Werkstücke (10) vorgesehen sind.

22. Vorrichtung nach Anspruch 21, **dadurch gekennzeichnet, dass** die Queranschläge (35) aus jeweils einer oder mehreren Leisten (35) gebildet sind.

23. Vorrichtung nach Anspruch 21 oder 22, **dadurch gekennzeichnet, dass** eine Vielzahl von Einzugsrollen in Zusammenarbeit mit den Queranschlägen (35) für die Ausrichtung der Werkstücke (10) vorgesehen sind.

24. , Vorrichtung nach einem der Ansprüche 14 bis 23, **dadurch gekennzeichnet, dass** oberhalb der Transporteinrichtung (51, 52) ein Oberdrucksystem (62) zur Einspannung der Werkstücke (10) angeordnet ist.
